# EUROPEAN PATENT SPECIFICATION

(11) **EP 0 978 308 B1**
(45) Date of publication and mention of the grant of the patent: **20.03.2002**
(21) Application number: 98114544.4
(22) Date of filing: 03.08.1998
(51) Int. Cl.: B01D 71/02, B01D 61/00, G21F 9/06

(54) **Method and apparatus for extracting hydrogen isotopes from a liquid Pb-17Li eutectic in a fusion reactor**
Verfahren und Vorrichtung zur Extraktion von Wasserstoffisotopen aus einem flüssigen Pb-17Li Eutektikum in einem Fusionsreaktor
Procédé et dispositif pour l'extraction d'isotopes d'hydrogène d'un eutectique Pb-17Li liquid dans un réacteur à fusion

(43) Date of publication of application: 09.02.2000
(73) Proprietor: EUROPEAN COMMUNITY, 2920 Luxembourg (LU)
(72) Inventor: Sedano, Luis Angel, 21027 Ispra (IT)
(74) Representative: Weinmiller, Jürgen, Dipl.-Ing.

(56) References cited:
- EP-A- 0 219 383
- EP-A- 0 489 636
- EP-A- 0 576 715
- US-A- 4 481 179
- US-A- 4 980 202
- MALARA, C.: "Tritium Extraction from Pb-17Li by Bubble Columns" FUSION TECHNOLOGY, vol. 28, October 1995, pages 693-699, XP002086709

## Description

The invention refers to a method for extracting hydrogen isotopes from a liquid Pb-17Li eutectic in a fusion reactor and to an extractor implementing this method.

A major concern for the design of the fuel cycle for deuterium and tritium fusion plants is the efficient and economic recovery of tritium from the breeding eutectic Pb-17Li.

An article "Tritium Extraction from Pb-17Li by Bubble Columns" by C. Malara, published in FUSION TECHNOLOGY Vol.28, Oct. 1995, p. 693 to 699 describes a column in which the breeder eutectic flows from the top to the bottom and a bubbler injects pressurized helium and produces a counter current of bubbles rising from the bottom to the top of the column. A flux of tritium atoms from the eutectic to the ascending bubbles increases progressively the axial molar fraction at the gas phase and extracts the tritium. At present, it is commonly accepted that the actually projected fusion reactor extractor columns are large and of low efficiency, and series of extractor columns are needed.

The invention aims in improving the tritium extraction rate thus allowing to reduce the size of the extractor and thereby the tritium inventory in the extractor. This aim is achieved by the method as claimed 1 and by the extractor implementing this method as defined in claim 2. As far as preferred embodiments of the extractor are concerned, reference is made to the dependent claims.

The invention will now be described in more detail by means of the accompanying drawings.
Figure 1 shows schematically an extractor tube according to the invention.
Figure 2 is a diagram showing the permeation rate of hydrogen as a function of temperature through an extractor according to the invention and, for comparison reasons, through a steel tube.

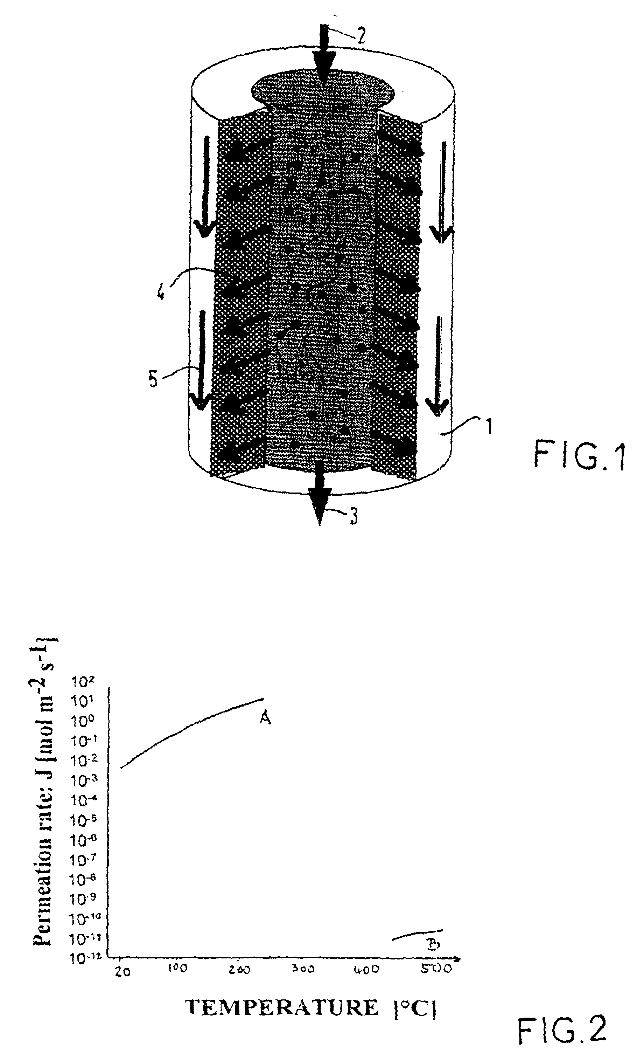

Now referring to figure 1, a tube 1 is made from a ceramic composite material mainly composed of silicon carbide fibres in a silicon carbide matrix. Such materials are known, for example from EP-A-0 489 636. They are commonly called SiC_{f}/SiC composite ceramics.

The fibres are compressed at high temperature and the matrix is formed by infiltration from the gaseous or liquid phase. The final tube can be characterized as follows:
fibre content: 40%
Porosity: 10%
Density: above 2.4 g/cm³

This material has been proposed until now as structural material in fusion experiments because of its stability against thermal and radiation stresses.

While the gas permeation through this material is of minor importance for structural elements of the reactor and have even not been evaluated, it has been found that the permeation rate for hydrogen isotopes through the wall of a tube made of this material subjected to liquid Pb-17Li eutectic is enormously large and renders this material particularly apt to constitute a selective gas permeation wall for the extraction of hydrogen isotopes from a liquid Pb-17Li eutectic.

Figure 2 shows the permeation rate for hydrogen through a membrane A as a function of temperature compared to that of a structural steel wall B of equal thickness (1mm) the pressure difference between inside and outside being in both cases 1 kPa. This diagram shows that the permeation rates for steel are immeasurable for temperatures below 500°C whereas the permeation rate for the SiC_{f}/SiC material are several magnitudes higher even for temperatures only slightly above room temperature.

Returning to figure 1, the tube 1 made from this material is fed with the liquid eutectic from the upper side (see arrow 2) and the liquid is withdrawn from the lower side (arrow 3). The gas permeation rate through the tube 1 allows hydrogen isotopes to pass through the wall according to arrows 4, and these gases are conveyed away by a helium flux sweeping the outside of the tube (arrows 5).

This flux according to arrows 5 can in a variant embodiment be inversely directed or be perpendicular to the tube axis if desired. The extractor can further be conceived like a heat exchanger with a multiplicity oil tubes in parallel between two manifolds.

The extractor according to the invention can finally be combined to a classical hydrogen extraction system according to the bubble principle mentioned above. In this case the lower end of the tube is connected to a breeder eutectic withdrawal line and a source of inert gas, whereas the upper end of the tube is connected to a breeder eutectic supply line and a gas extraction line for extracting gases having bubbled through the liquid eutectic and having been released from the liquid surface. Such a combination adds the extraction rate of the bubble system to that of the permeation system.

Besides the high permeation rate which ensures a high gas extraction rate, a major advantage of the present invention is the low temperature at which such high permeation rates are achieved (see figure 2). It is therefore not necessary to heat the liquid leaving the reactor expressly for enhancing the permeation rate.

The extractor according to the invention is simple because no complex geometry is needed to increase the residence time of the bubbles in the tube. It allows the use of relatively small extraction columns thus reducing the dynamic fuel inventory in the extractor and improving the safety of the fusion fuel cycle.

Because of the high efficiency at low temperature, that means below the temperature threshold for the corrosion of SiC_{f}/SiC by Li, no major aging effect is observed in the ceramic material. This results in long operation times.

## Claims

1. A method for extracting hydrogen isotopes from a liquid Pb-17Li breeding eutectic of a nuclear fusion reactor, **characterized in that** the eutectic is made to flow along a first side of a wall made from a ceramic composite material essentially composed of silicon carbide fibres and a silicon carbide matrix, called SiC_{f}/SiC, and that an inert gas is made to sweep the opposite side of this wall for collecting the hydrogen isotopes having permeated through the wall.

2. An extractor for implementing the method according to claim 1, **characterized in that** the wall is a tube (1) of circular cross-section made from SiC_{f}/SiC.

3. An extractor according to claim 2, **characterized in that** the inside of the tube (1) is conceived to be traversed by the eutectic (arrows 2, 3) whereas the inert gas is intended to sweep the outside of the tube (arrow 5).

4. An extractor according to claim 3, **characterized in that** the tube is vertical and that the intended flow direction inside and outside the tube is the same.

5. An extractor according to claim 4, **characterized in that** the lower end of the tube is connected to a breeder eutectic withdrawal line and a source of inert gas, whereas the upper end of the tube is connected to a breeder eutectic supply line and a gas extraction line for extracting gases having bubbled through the liquid eutectic and having been released from the liquid surface.

## Patentansprüche

1. Methode zur Extraktion von Wasserstoffisotopen aus einem flüssigen Brut-Eutektikum Pb-17Li eines Kernfusionsreaktors, **dadurch gekennzeichnet, daß** das Eutektikum entlang einer ersten Seite einer Wand aus einem keramischen Verbundmaterial geleitet wird, das im wesentlichen aus Siliziumkarbidfasern und einer Siliziumkarbidmatrix, auch SiC_{f}/SiC genannt, besteht und daß ein Inertgas an der entgegengesetzten Seite dieser Wand entlangstreicht, um die Wasserstoffisotope zu sammeln, die die Wand durchdrungen haben.

2. Extraktor zur Durchführung der Methode nach Anspruch 1, **dadurch gekennzeichnet, daß** die Wand ein Rohr (1) mit kreisförmigem Querschnitt aus SiC_{f}/SiC ist.

3. Extraktor nach Anspruch 2, **dadurch gekennzeichnet, daß** die Innenseite des Rohrs (1) so ausgebildet ist, daß das Eutektikum dieses durchströmen kann (Pfeile 2, 3), während das Inertgas die Außenseite des Rohrs umstreicht (Pfeil 5).

4. Extraktor nach Anspruch 3, **dadurch gekennzeichnet, daß** das Rohr vertikal angeordnet ist und daß die Strömungsrichtung innerhalb und außerhalb des Rohrs im Betrieb dieselbe ist.

5. Extraktor nach Anspruch 4, **dadurch gekennzeichnet, daß** das untere Ende des Rohrs mit einer Abfuhrleitung für das Brut-Eutektikum und mit einer Quelle für ein Inertgas verbunden ist, während das obere Ende des Rohrs mit einer Zufuhrleitung für das Brut-Eutektikum und mit: einer Gasabfuhrleitung für den Abzug der Gase verbunden ist, die durch das flüssige Eutektikum aufgestiegen sind und aus der Oberfläche der Flüssigkeit austreten.

## Revendications

1. Méthode pour extraire d'isotopes d'hydrogène à partir d'un eutectique liquide régénérateur Pb-17Li dans un réacteur nucléaire de fusion, **caractérisé en ce que** l'eutectique est amené en contact avec un coté d'une paroi faite en un matériau composite céramique dénommée SiC_{f}/SiC qui est essentiellement composé de fibres en carbure de silicium et d'une matrice en carbure de silicium, et qu'un gaz inerte balaie le coté opposé de cette paroi pour ramasser les isotopes d'hydrogène ayant traversé la paroi.

2. Extracteur pour mettre en oeuvre la méthode selon la revendication 1, **caractérisé en ce que** la paroi est un tube (1) en SiC_{f}/SiC ayant une section transversale circulaire.

3. Extracteur selon la revendication 2, **caractérisé en ce que** l'intérieur du tube (1) est conçu pour être traversé par l'eutectique (flèches 2, 3) alors que le gaz inerte est conçu pour balayer le coté extérieur du tube (flèche 5).

4. Extracteur selon la revendication 3, **caractérisé en ce que** le tube est disposé verticalement est que les directions du flux à l'intérieur et à l'extérieur sont les mêmes.

5. Extracteur selon la revendication 4, **caractérisé en ce que** l'extrémité inférieure est connectée à un conduit d'évacuation d'eutectique régénérateur et à une source de gaz inerte, alors que l'extrémité supérieure du tube est connectée à un conduit d'approvisionnement en eutectique régénérateur et à un conduit d'extraction des gaz pour extraire ces gaz de la surface de l'eutectique liquide après avoir traversé ce liquide.
